(19) **Europäisches Patentamt European Patent Office Office européen des brevets**

(11) **EP 2 212 652 B1**

(12) **FASCICULE DE BREVET EUROPEEN**

(45) Date de publication et mention de la délivrance du brevet:
**01.06.2016 Bulletin 2016/22**

(21) Numéro de dépôt: **08872429.9**

(22) Date de dépôt: **20.11.2008**

(51) Int Cl.:
***G01D 5/14*** *(2006.01)*

(86) Numéro de dépôt international:
**PCT/FR2008/001626**

(87) Numéro de publication internationale:
**WO 2009/101270 (20.08.2009 Gazette 2009/34)**

(54) **CAPTEUR DE POSITION MAGNETIQUE ANGULAIRE OU LINEAIRE PRESENTANT UNE INSENSIBILITE AUX CHAMPS EXTERIEURS**

GEGEN EXTERNE FELDER UNEMPFINDLICHER WINKEL- ODER LINEAR-MAGNETPOSITIONSSENSOR

ANGULAR OR LINEAR MAGNETIC POSITION SENSOR NOT SENSITIVE TO EXTERNAL FIELDS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.11.2007 FR 0708132**

(43) Date de publication de la demande:
**04.08.2010 Bulletin 2010/31**

(73) Titulaire: **Moving Magnet Technologies (MMT) 25000 Besançon (FR)**

(72) Inventeurs:
• **MASSON, Gérald**
  **F-25000 Besançon (FR)**
• **JERANCE, Nikola**
  **Oxford OX2 OBN (GB)**
• **FRACHON, Didier**
  **F-25000 Besançon (FR)**
• **ARLOT, Richard**
  **F-70700 Bonnevent Velloreille (FR)**
• **DORGE, Thierry**
  **F-25610 Arc et Senans (FR)**

(74) Mandataire: **IP Trust**
  **2, rue de Clichy**
  **75009 Paris (FR)**

(56) Documents cités:
**EP-A- 1 074 818        EP-A- 1 083 406**
**DE-A1-102006 051 720        FR-A- 2 893 410**
**FR-A- 2 898 189        US-A1- 2005 253 578**

EP 2 212 652 B1

**Description**

La présente invention concerne le domaine des capteurs de position rotatifs et linéaires magnétiques pour des angles pouvant aller jusqu'à 360° voire plus et des déplacements pouvant aller à des centaines de millimètres, et plus particulièrement les capteurs de position destinés à la mesure de la position angulaire d'une colonne de direction pour automobile, sans que cette application ne soit exclusive.

Les capteurs sans contact qui détectent l'angle ou un déplacement à partir d'un champ magnétique ont de nombreux avantages :

- pas de contact mécanique avec la partie mobile, et donc pas d'usure,
- insensibilité à la saleté,
- coût de production réduit,
- longue durée de vie.

On connaît dans l'état de la technique le brevet EP1083406 décrivant un capteur rotatif (Figures 1 et 2), présentant un aimant bague et deux éléments magnétosensibles, qui mesurent la composante radiale du champ généré par l'aimant et qui conduit à deux signaux sinusoïdaux en quadrature qui servent après décodage à détecter la position sur 360 degrés.

L'inconvénient de cette solution est sa sensibilité au champ extérieur. En effet, tout champ extérieur dans le plan des sondes induira une erreur importante de non linéarité.

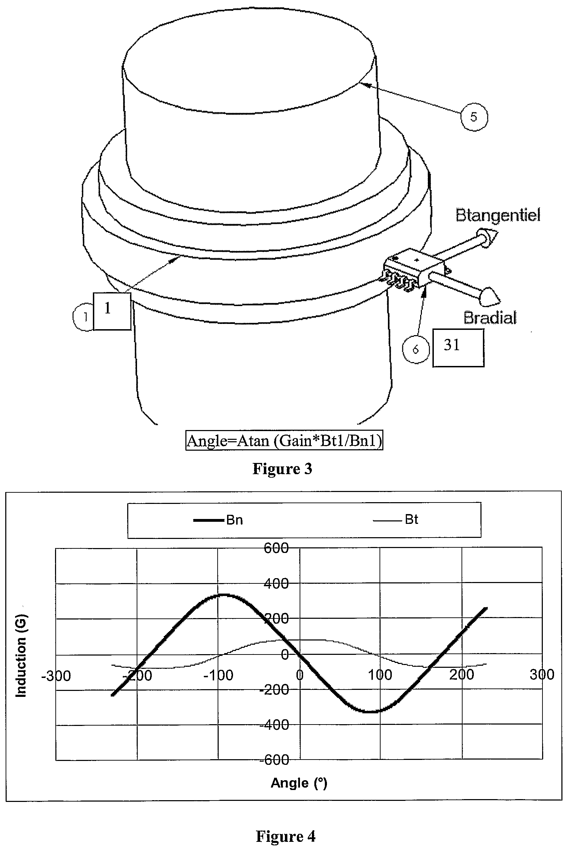

On connaît dans l'état de la technique le brevet WO07057563 de la déposante décrivant un capteur de position (Figures 3 et 4) permettant d'utiliser deux composantes du champ magnétique (radiale et tangentielle ou axiale et tangentielle) mesurées sensiblement en un seul point hors de l'axe de rotation d'un aimant bague ou disque aimanté diamétralement, de manière à connaître sa position angulaire même si cet angle ne correspond pas à l'angle du champ magnétique. La composante radiale et la composante axiale du champ magnétique généré par l'aimant sont deux sinusoïdes qui sont en phase, alors que la composante tangentielle est une sinusoïde déphasée de 90 degrés par rapport aux deux autres composantes du champ magnétique (voir Figure 4). Il est donc possible d'utiliser un couple de composantes du champ magnétique déphasées de 90 degrés (tangentielle et radiale ou tangentielle et axiale) pour décoder l'angle de l'aimant. Le décodage de la position angulaire de l'aimant à partir de ces deux composantes, dont les amplitudes sont en général différentes, nécessite de normaliser les deux composantes utilisées pour pouvoir faire le calcul de l'arc tangente afin d'en déduire l'angle. On connaît également dans l'état de la technique le brevet PCT WO27099238 de la déposante décrivant un capteur de position linéaire et rotatif (pour des angles inférieurs à 360°) utilisant le même principe que le capteur 360° décrit précédemment. Il utilise deux composantes du champ magnétique (normal et tangentielle ou axiale et tangentielle) mesurées sensiblement en un même point et généré par un aimant plat ou une tuile dont la direction d'aimantation est continûment variable le long du déplacement.

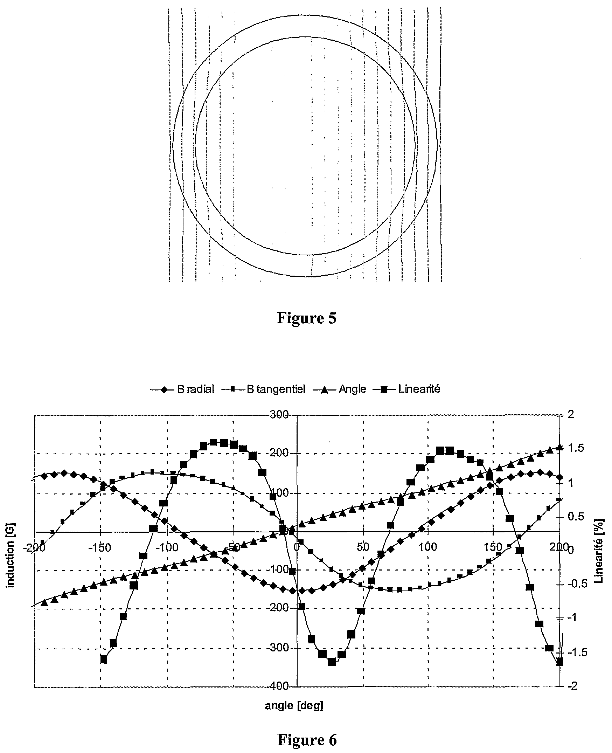

L'inconvénient de ces deux solutions est la sensibilité à tout champ magnétique extérieur. Il est possible de blinder le capteur, mais cela rajoute des pièces supplémentaires et augmente le coût de fabrication ainsi que l'encombrement du capteur. De plus, l'application d'un gain entre les composantes est problématique (bruit de la sonde, dérive en température) et l'aimantation diamétrale (dans le cas du capteur 360°) n'est pas aisée et peut provoquer des erreurs d'harmoniques. En effet, les performances (linéarité du signal de sortie) du capteur 360° dépendent directement de l'obtention d'une bonne aimantation diamétrale. Le champ d'aimantation, représenté en figure 5, nécessaire pour aimanter diamétralement un aimant bague est aisément obtenu avec une simple bobine parcourue par un courant. La différence de perméabilité magnétique entre l'air et le matériau à aimanter produit une courbure des lignes de champ, courbure qui suit la relation de réfraction à la frontière entre deux milieux suivante :

$$\frac{\tan(\alpha_1)}{\tan(\alpha_2)} = \frac{\mu_{r1}}{\mu_{r2}}$$

Cette courbure se traduit par une aimantation du matériau qui n'est pas diamétrale et donc par une distorsion des deux composantes mesurées, telles qu'elles sont représentées en figure 4. Ces deux signaux ne sont pas deux sinusoïdes parfaites déphasées de 90° ce qui se traduit lors du décodage par une très forte non linéarité comme nous pouvons le constater sur cette même figure 6 qui montre le signal décodé à partir des deux composantes du champ magnétique.

Le document DE102006051720 décrit un capteur selon l'état de la technique.

La présente invention se propose de résoudre les problèmes mentionnés ci-dessus en permettant d'utiliser une combinaison de deux paires composantes du champ magnétique (normales et tangentielles) mesurées en deux points décalés spatialement préférentiellement d'un quart de période.

La période pour un capteur rotatif est l'angle total de l'aimant.

La période pour un capteur linéaire est sa longueur.

Deux composantes sont mesurées en un même point (physiquement, nous considérons que les mesures sont faites en un même point, si la distance effective entre les points de mesure des deux composantes du champ magnétique est inférieure à 5 mm) et deux autres composantes sont mesurées en un autre point décalé spatialement d'environ un quart de période (Ex :décalage de 90° pour un capteur 360°) La solution ci-après décrite permet ainsi de diminuer l'effet du champ extérieur, de compenser une partie des erreurs d'harmoniques dues à l'aimantation et de ne plus utiliser de gain entre les composantes.

Soit :

Bn1 Composante normale au point 1

Bt1 Composante tangentielle au point 1

Bn2 Composante normale au point 2

Bt2 Composante tangentielle au point 2

Soit TÉTA l'angle de rotation, et en prenant en compte l'erreur d'harmonique 3 (erreur majoritaire) due a l'aimantation diamétrale, nous avons :

$$\texttt{Bn1 = h}_1\texttt{*cos(TÉTA) + h}_3\texttt{*cos(3TÉTA)}$$

$$\texttt{Bt1 = h'}_1\texttt{*sin(TÉTA) + h'}_3\texttt{*sin(3TÉTA)}$$

Si les points 1 et 2 sont spatialement décalés de 90°, alors

$$\texttt{Bn2 = h}_1\texttt{*cos(TÉTA+2/PI) + h}_3\texttt{*cos(3(TÉTA+2/PI))}$$

$$\texttt{= - h}_1\texttt{*sin(TÉTA)+ h}_3\texttt{*sin(3TÉTA)}$$

$$\texttt{Bt2 = h'}_1\texttt{*sin (TÉTA+2/PI) + h'}_3\texttt{*sin(3(TÉTA+2/PI))}$$

$$\texttt{= h'}_1\texttt{*cos(TÉTA) - h'}_3\texttt{*cos(3TÉTA)}$$

La présente invention propose de combiner les composantes deux à deux de la façon suivante :

$$\texttt{Bn=Bn1+Bt2}$$

$$\texttt{Bt=Bt1 - Bn2}$$

Ainsi :

$$Bn = h_1*\cos(\text{TÉTA}) + h_3*\sin(3\text{TÉTA}) + h'_1*\cos(\text{TÉTA}) - h'_3*\cos(3\text{TÉTA})$$

$$= (h_1+ h'_1)*\cos(\text{TÉTA}) + \underbrace{(h_3 - h'_3)*\cos(3\text{TÉTA})}_{\sim 0}$$

$$= (h_1 + h'_1)*\cos(\text{TÉTA})$$

$$Bt = h_1*\sin(\text{TÉTA}) - h_3*\sin(3\text{TÉTA}) + h'_1*\sin(\text{TÉTA}) + h'_3*\sin(3\text{TÉTA})$$

$$= (h_1+ h'_1)*\sin(\text{TÉTA}) + \underbrace{(h'_3- h_3)*\sin(3\text{TÉTA})}_{\sim 0}$$

$$= (h_1+h'_1)*\sin(\text{TÉTA})$$

Ainsi les deux signaux obtenus sont de même amplitude mais déphasés de 90° et quasi parfaitement sinusoïdaux. En effet, la combinaison d'une composante normale imparfaite (forme triangulaire due à une harmonique 3) et d'une composante tangentielle imparfaite (forme rectangulaire due à une harmonique 3) permet d'annuler ou tout du moins diminuer fortement ce défaut d'harmonique et d'obtenir deux composantes quasiment sinusoïdales.

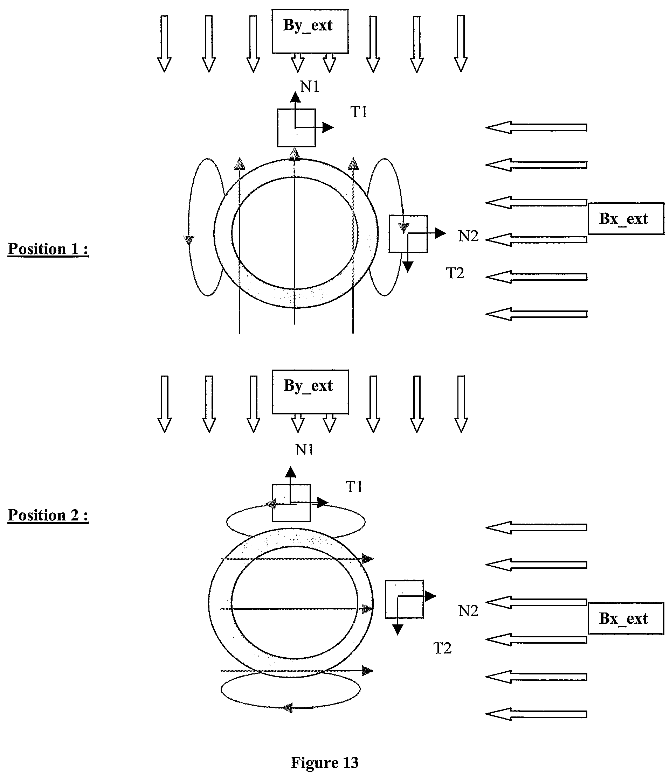

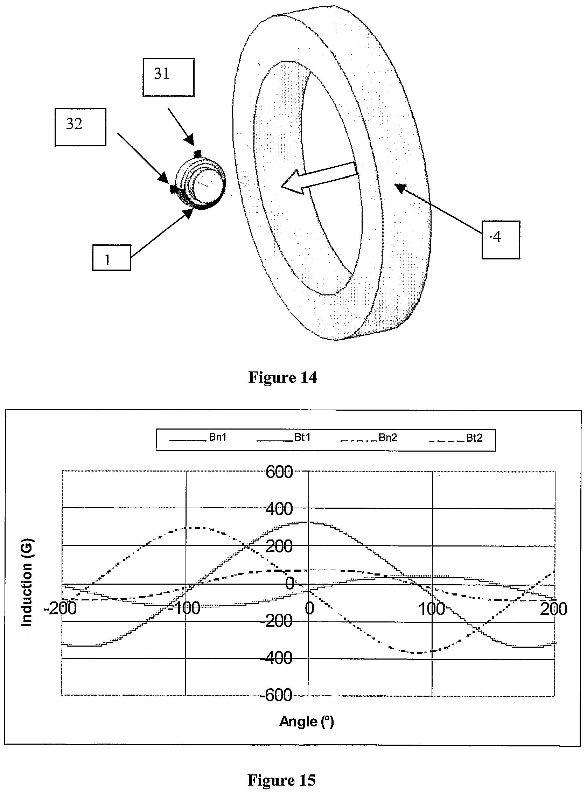

De plus si (voir les figures 13 et 14) nous avons un champ magnétique extérieur suivant l'axe x et y (Bx_ext et By_ext), la combinaison deux à deux des composantes permet d'annuler l'effet du champ extérieur.

Ainsi, si on se réfère à la position 1 de l'aimant de la figure 13, nous avons :

$$Bn1 = Bn\_max - By\_ext$$

$$Bt1 = -Bx\_ext$$

$$Bn2 = -Bx\_ext$$

$$Bt2 = Bt\_max + By\_ext$$

Ce qui nous donne au final :

$$Bn = Bn1+Bt2=Bn\_max+Bt\_max$$

$$Bt = Bt1-Bn2=0$$

Si on se réfère à la position 2 de l'aimant de la figure 13, nous avons maintenant:

$$Bn1 = 0 - By\_ext$$

$$Bt1 = -Bt\_max \ \ -Bext$$

$$Bn2 = Bn\_max \ -Bext$$

$$Bt2 = By\_ext$$

Ce qui nous donne :

$$Bn =Bn1+Bt2=0$$

$$Bt =Bt1-Bn2= -Bn\_max - Bt\_max$$

Les deux signaux obtenus sont bien de la même amplitude et l'effet du champ extérieur a été annulé.

Selon un mode de réalisation avantageux pour améliorer la précision d'une configuration de capteur rotatif dans le cas où les harmoniques 3 des composantes normales et tangentielles ne sont pas égales $(h'_3 - h_3) \neq 0$. Ce mode de réalisation reprend en tout point la description ci-dessus et intègre de ce fait tous les avantages de cette dernière.

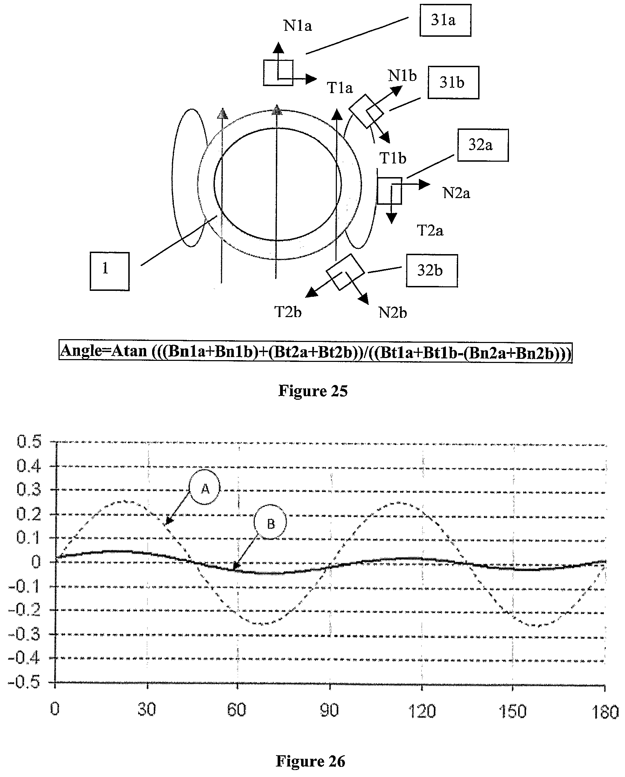

Il apporte en plus comme avantage la compensation de l'intégralité des défauts d'harmoniques 3 dues aux défauts d'aimantation liés à la géométrie de l'aimant, afin d'obtenir 2 composantes parfaitement sinusoïdales, par l'utilisation d'une combinaison astucieuse de 4*2 composantes du champ magnétique (normales et tangentielles) mesurées en 2*2 points décalés respectivement spatialement d'un 1/4 de période (solution précédente) et de préférentiellement 1/8 de période (décalage de 45° pour un capteur 360°) comme le montre la figure 25.

Soit :

Bn1a Composante normale au point la

Bn1b Composante normale au point 1b

Bt1a Composante tangentielle au point la

Bt1b Composante tangentielle au point 1b

Bn2a Composante normale au point 2a

Bn2b Composante normale au point 2b

Bt2a Composante tangentielle au point 2a

Bt2b Composante tangentielle au point 2b

La présente solution propose de combiner 2 à 2 les composantes normales et tangentielles des 2 couples de points (a et b) décalés de 1/8 de période préalablement aux combinaisons décrites précédemment, solution qui permet d'éliminer le résiduel d'harmonique $(h_3 - h'_3)$ de la façon suivante :

$$Bn1= Bn1a + Bn1b$$

$$Bt1= Bt1a + Bt1b$$

$$Bn2 = Bn2a + Bn2b$$

$$Bt2 = Bt2a + Bt2b$$

Soit TÉTA l'angle de rotation, et comme dans le développement de la solution précédente, en prenant en compte l'erreur d'harmonique 3 (erreur majoritaire) due a l'aimantation diamétrale, nous obtenons avec $(h_3 - h'_3) = 0$ :

$$Bn = (h_1 + h'_1)*cos(TÉTA)$$

$$Bt = (h_1+h'_1)*sin(TÉTA)$$

Toutes les considérations avec un champ magnétique extérieur restent inchangées.

Le circuit de traitement de signal numérique combine les composantes (ce qui permet d'obtenir deux sinusoïdes dont l'amplitude est sensiblement la même) et effectue les différentes compensations (d'offset, d'orthogonalité, de variation des paramètres de la sonde en température) avant de faire la division et le calcul d'arc tangente. L'angle obtenu est disponible à la sortie du circuit intégré, par exemple sous la forme d'une tension proportionnelle à cet angle.

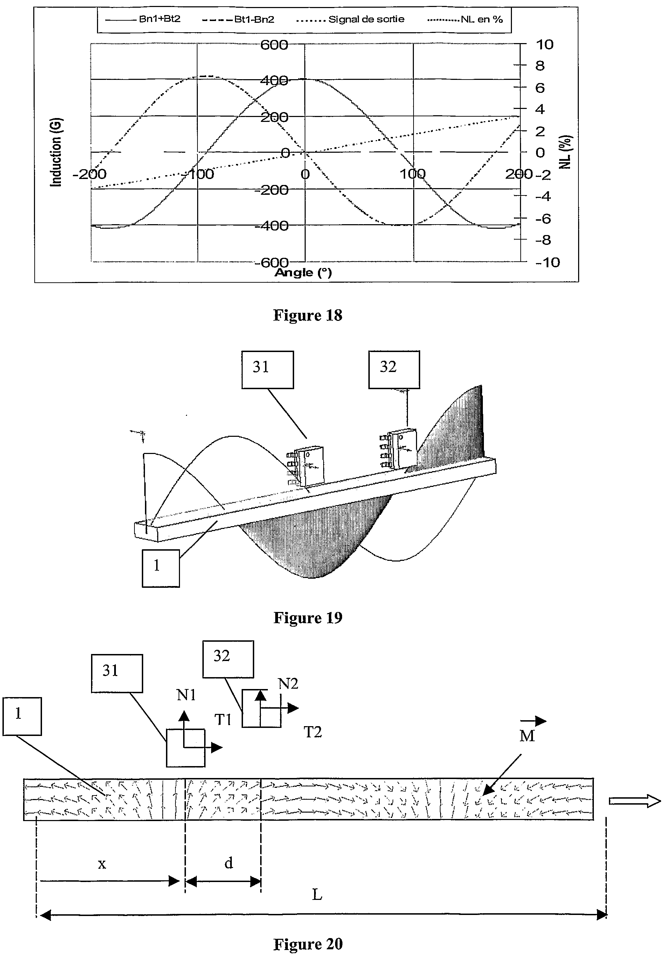

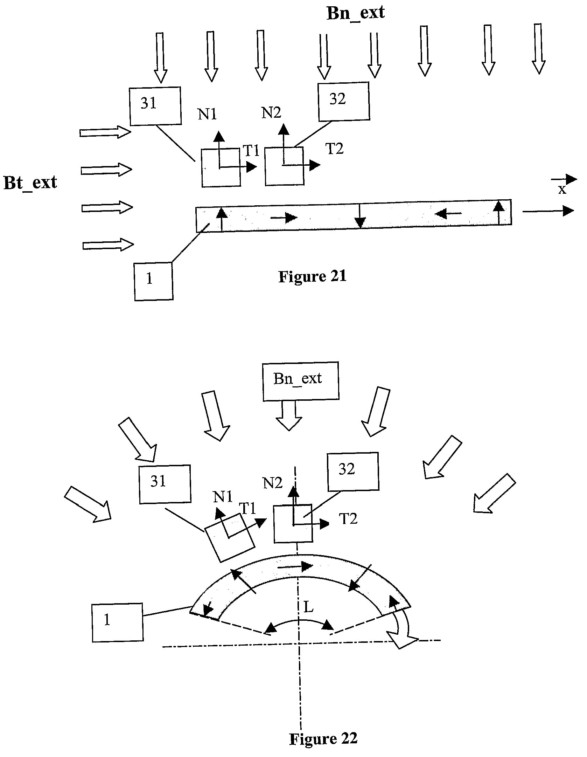

Dans une configuration linéaire telle que montrée figures 20 et 21 où le champ magnétique tourne continûment le long de la course du capteur, on peut également combiner deux à deux les composantes du champ magnétique pour éliminer le champ extérieur.

Soit :

Bn1 Composante normale au point 1

Bt1 Composante tangentielle au point 1

Bn2 Composante normale au point 2

Bt2 Composante tangentielle au point 2

x la course du capteur, L la course totale du capteur

d la distance entre le point 1 et le point 2 (0<d<L)

Alors

$$Bn1 = h_1*cos(2xL/PI) - By\_ext$$

$$Bt1 = h'_1*sin(2xL/PI) + Bx\_ext$$

$$Bn2 = h_1*cos(2xL/PI +2dL/PI) - By\_ext$$

$$Bt2 = h'_1*sin(2xL/PI +2dL/PI) + Bx\_ext$$

$$Soit \quad Bn1-Bn2 = h_1*(cos(2xL/PI) - cos(2xL/PI +2dL/PI))$$

$$Bt1-Bt2 = h'_1*(\sin(2xL/PI) - \sin(2xL/PI + 2dL/PI))$$

$$Bn1-Bn2 = h_1*(\cos 2xL/PI - \cos(2xL/PI + 2dL/PI))$$

$$= -2h_1*\sin(2xL/PI + dL/PI)*\sin(-d/L*PI)$$

$$= (-2*h_1*\sin(-d/L*PI))* \sin(2xL/PI + dL/PI)$$

**Constante -A.h1**

$$Bt1-Bt2 = h'_1*(\sin(2xL/PI) - \sin(2xL/PI + 2dL/PI))$$

$$= 2*h'_1*\cos(2xL/PI + dL/PI)*\sin(-d/L*PI)$$

$$= (2h'_1*\sin(-d/L*PI))* \cos(2xL/PI + dL/PI)$$

**Constante A.h'_1**

$$Bn1-Bn2 = - Ah_1* \sin(2xL/PI + dL/PI)$$

$$Bt1-Bt2 = Ah'_1* \cos(2xL/PI + dL/PI)$$

Ainsi, les deux signaux obtenus sont d'amplitudes différentes, mais déphasées de 90°, et parfaitement sinusoïdaux. La combinaison deux à deux des composantes permet d'éliminer tout champ extérieur homogène quelle que soit sa direction.

L'amplitude des deux signaux obtenus dépend de la distance entre les deux points 1 et 2. L'amplitude sera maximale si les deux points sont espacés d'une demi-période (d=L/2) et nulle si d=0 ou L. On privilégiera donc un décalage entre les deux points 1 et 2 correspondant à environ ¼ de période qui s'avère être un bon compromis entre l'amplitude des signaux obtenus et l'encombrement du capteur.

Le circuit de traitement de signal numérique combine les composantes et effectue les différentes compensations (d'offset, d'orthogonalité, de variation des paramètres de la sonde en température) normalise les signaux avant de faire la division et le calcul d'arc tangente. Le signal de sortie obtenu est disponible à la sortie du circuit intégré, par exemple sous la forme d'une tension proportionnelle à la course linéaire du capteur.

L'invention sera mieux comprise à la vue des différentes figures.

- la figure 1 représente une vue d'un capteur rotatif de l'art antérieur utilisant deux composantes normales de l'induction mesurée en deux points spatialement décalés de 90°,
- la figure 2 montre les deux composantes normales de l'induction magnétique d'une solution de l'art antérieur,
- la figure 3 représente une vue d'un capteur rotatif de l'art antérieur utilisant une composante normale et tangentielle de l'induction,
- la figure 4 représente la composante normale et tangentielle de l'induction magnétique en un même point d'une solution de l'art antérieur,
- la figure 5 représente les lignes de champ à l'intérieur de l'aimant lors de l'aimantation pour un matériau avec une

perméabilité relative ($\mu$r) égale à 1.2,

- la figure 6 représente les composantes normale et tangentielle de l'induction magnétique ainsi que la non linéarité du signal mesurées sur un aimant bague circulaire isotrope aimanté « diamétralement »,
- la figure 7 représente une vue générale de la présente invention avec les deux sondes bidirectionnelles 31 et 32,
- la figure 8 représente une vue 3D de la présente invention avec les deux sondes bidirectionnelles 31 et 32,
- la figure 9 représente uniquement les composantes normale et tangentielle de l'induction magnétique de la sonde 31,
- la figure 10 représente la non linéarité du signal mesuré par la sonde 31 sur un aimant bague circulaire isotrope aimanté « diamétralement »,
- la figure 11 représente deux signaux sinusoïdaux obtenus à partir de la combinaison deux à deux des composantes normales et tangentielles de l'induction magnétique mesurées par les sondes 31 et 32,
- la figure 12 représente la non linéarité obtenue à partir des signaux de la figure 11,
- la figure 13 représente deux positions angulaires de l'aimant en présence d'un champ magnétique extérieur,
- la figure 14 représente une vue de l'invention et une bobine excitatrice qui crée un champ magnétique extérieur,
- la figure 15 représente les deux composantes normales et tangentielles des sondes 31 et 32 sous l'effet d'un champ extérieur tel que défini figure 14,
- la figure 16 représente la non linéarité du signal mesuré par la sonde 31 sur un aimant bague circulaire isotrope aimanté « diamétralement » sous l'effet du champ extérieur,
- la figure 17 représente la non linéarité du signal mesuré par la sonde 32 sur un aimant bague circulaire isotrope aimanté « diamétralement » sous l'effet du champ extérieur,
- la figure 18 représente la non linéarité du signal obtenue par combinaison deux à deux des composantes normales et tangentielles mesurées par les sondes 31 et 32,
- la figure 19 représente une vue générale de la présente invention appliquée sur un capteur linéaire avec Les deux sondes bidirectionnelles 31 et 32,
- la figure 20 représente une vue de côté de la présente invention avec les deux sondes bidirectionnelles 31 et 32,
- la figure 21 représente une vue de côté de la présente invention avec les deux sondes bidirectionnelles 31 et 32 en la présence de champs extérieurs,
- la figure 22 représente une vue générale de la présente invention appliquée sur un capteur rotatif petit angle avec les deux sondes bidirectionnelles 31 et 32,
- la figure 23 montre les deux composantes normales et tangentielles des sondes 31 et 32 décalées spatialement de ¼ de période,
- la figure 24 montre les deux signaux sinusoïdaux résultants de la combinaison deux à deux des quatre signaux précédents et le signal de sortie obtenu au final.
- La figure 25 représente une vue générale de la présente invention avec les 2 sondes bidirectionnelles 31a et 32a associées à 2 autres sondes bidirectionnelles 31b et 32b.
- La figure 26 représente une non-linéarité du signal simulé de la présente invention et son amélioration possible grâce à l'optimisation proposée à l'aide de 2 autres sondes Bidirectionnelles 31b et 32b

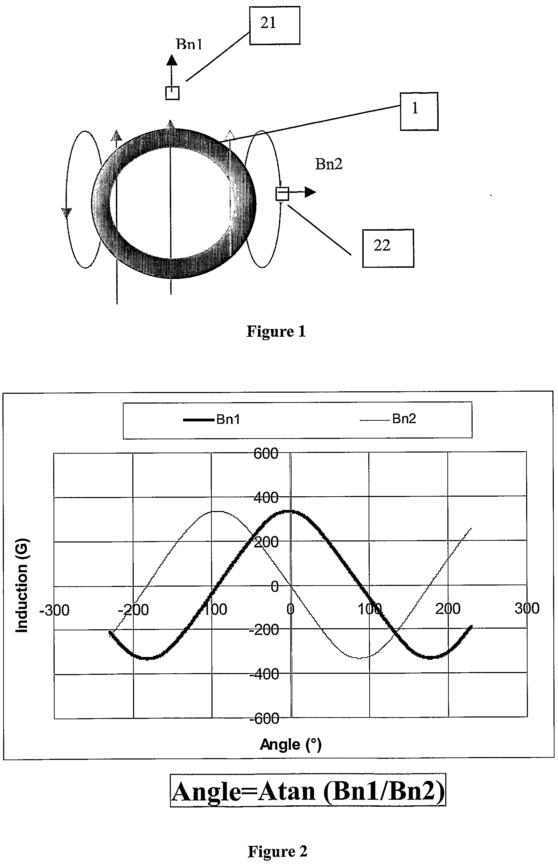

Les figures 1 et 2 représentent une solution de l'art antérieur sensible au champ extérieur. Sur la figure, nous avons un aimant permanent bague aimanté sensiblement diamétralement (1) ; cet aimant génère en n'importe quel point de l'espace un champ magnétique dont les composantes normales sont mesurées par deux éléments magnétosensibles 21 et 22 spatialement décalés de 90° dont les signaux sont ensuite traités pour décoder l'angle ainsi que pour normaliser les deux composantes afin de sortir un signal électrique proportionnel à la position angulaire de l'aimant.

Sur les figures 3 et 4 est montrée une autre solution de l'art antérieur sensible au champ extérieur et au défaut d'aimantation diamétrale. Cette solution consiste en un aimant permanent bague aimanté sensiblement diamétralement (1), cet aimant génère en m'importe quel point de l'espace un champ magnétique dont les composantes normale ou axiale et tangentielle sont mesurées par deux éléments magnétosensibles situés en un même point dont les signaux sont ensuite traités par un élément de traitement qui réalise le décodage ainsi que la normalisation des deux composantes afin de sortir un signal électrique proportionnel à la position angulaire de l'aimant.

La figure 5 montre les lignes de champ, lors de l'aimantation, à l'intérieur et à l'extérieur d'un aimant bague avec une perméabilité relative égale à 1.2. Les lignes de champ subissent une déformation lors de la traversée de l'aimant, déformation due à la différence de perméabilité relative entre l'air ($\mu$r = 1) et l'aimant ($\mu$r = 1.2 dans le cas présent). Cette déviation des lignes de champ se traduit donc par une mauvaise aimantation diamétrale de l'aimant.

La figure 6 montre les composantes normale et tangentielle non parfaitement sinusoïdales dues à la mauvaise aimantation diamétrale et la non linéarité obtenue à partir de ces signaux.

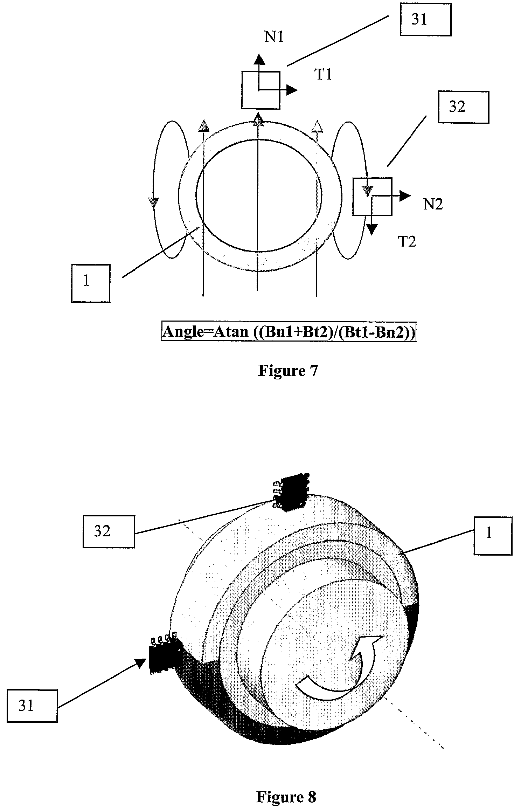

Les figures 7 et 8 montrent des vues de la présente invention. Cette solution consiste en un aimant permanent bague aimanté sensiblement diamétralement (1), cet aimant génère en n'importe quel point de l'espace un champ magnétique dont les composantes normales ou axiales et tangentielles sont mesurées par quatre éléments magnétosensibles. Deux éléments magnétosensibles sont situés en un seul point et avantageusement intégré dans un même boîtier (31) et les deux autres éléments magnétosensibles sont situés en un même point avantageusement intégré dans un même boîtier (32) qui est spatialement décalé de 90° du boîtier (31). Les quatre signaux sont ensuite combinés deux à deux pour annuler l'effet d'un champ extérieur et les erreurs dues à une aimantation diamétrale afin de sortir un signal électrique parfaitement proportionnel à la position angulaire de l'aimant. Le circuit de traitement du signal peut être intégré dans un des boîtiers (31) ou (32), ou dans les deux pour une question de redondance, ou bien peut être réalisé à l'extérieur des boîtiers (31) et (32).

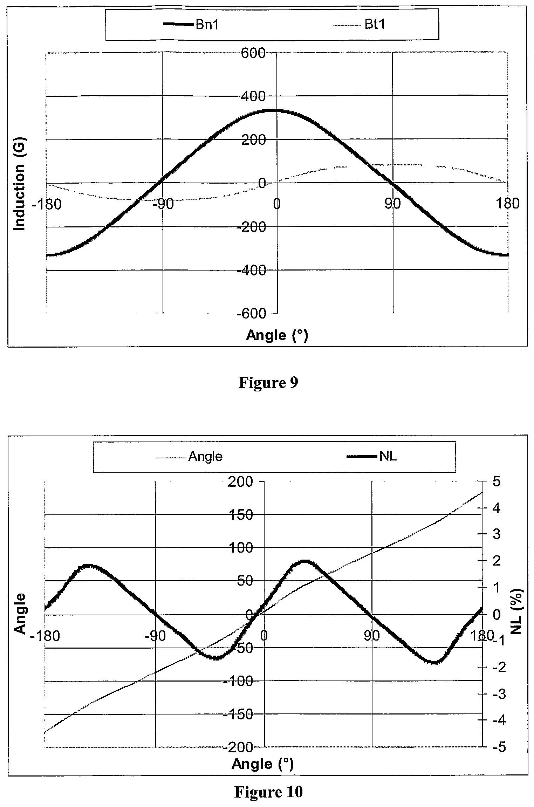

Les figures 9 et 10 montrent la mesure de deux composantes normale et tangentielle générées en un seul point par un aimant diamétral et l'erreur obtenue en utilisant uniquement une seule sonde (31).

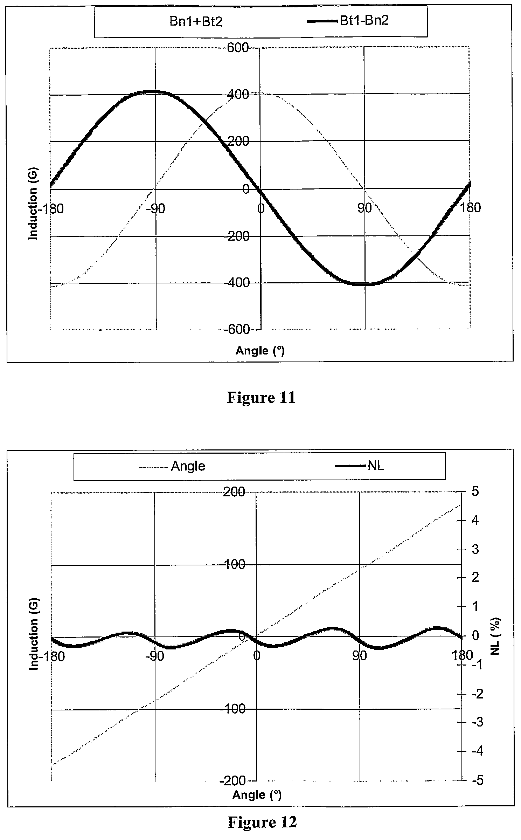

La figure 11 montre la combinaison deux à deux des quatre signaux mesurés par les 4 éléments magnétosensibles intégrés dans les boîtiers (31) et (32). Deux signaux parfaitement sinusoïdaux et de même amplitude sont obtenus en additionnant la composante normale mesurée par (31) et la composante tangentielle mesurée par (32) et en soustrayant la composante normale mesurée par (32) à la composante tangentielle mesurée par (31).

La figure 12 montre l'angle de sortie décodé à partir des deux signaux sinusoïdaux de la figure 11 et la non linéarité ainsi obtenue. L'erreur obtenue en combinant 4 composantes permet ainsi d'éliminer les erreurs dues à l'aimantation diamétrale.

Les figures 13 et 14 montrent la présente invention avec la présence d'un champ magnétique extérieur. La figure 13 présente deux positions différentes de l'aimant (1) sous l'effet d'un champ extérieur homogène Bext. Le champ extérieur est dans ce cas horizontal et perturbe la composante tangentielle de la sonde (31) et la composante normale de la sonde (32). La figure 14 est une vue de la présente invention avec une bobine (4) qui génère un champ magnétique perturbateur. La source de génération du champ extérieur pourrait très bien être un aimant à la place de la bobine.

La figure 15 montre une mesure des deux composantes normales et des deux composantes tangentielles mesurées par les éléments magnétosensibles des sondes (31) et (32) en la présence d'un champ extérieur comme présenté dans Les deux figures précédentes. On peut ainsi constater que la composante normale de la sonde (32) et la composante tangentielle de la sonde (31) sont effectivement affectées.

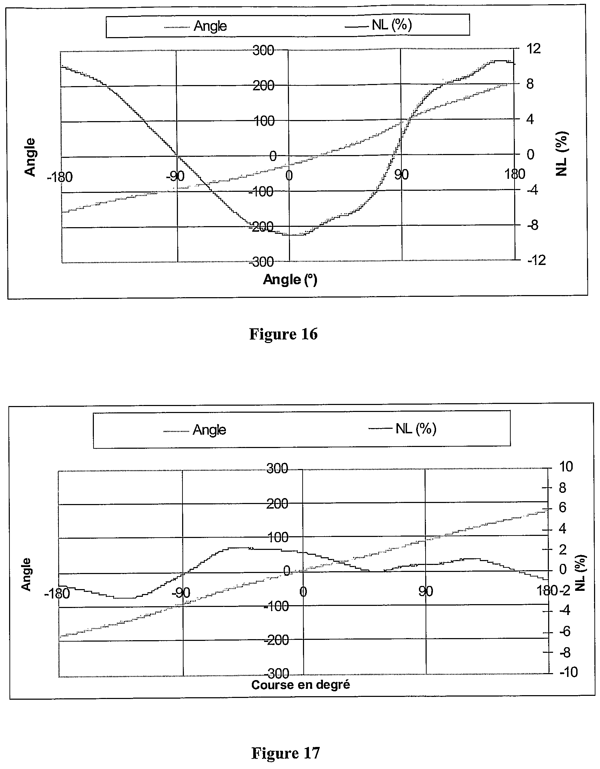

Les figures 16 et 17 montrent respectivement le signal de sortie des boîtiers (31) et (32) ainsi que la non linéarité de ces deux signaux sous l'effet du champ extérieur défini dans les figures précédentes. On se rend ainsi compte que le signal en sortie du boîtier (31) n'est pas du tout linéaire à cause du champ extérieur qui modifie sa composante tangentielle et que le signal de sortie du boîtier (32) est également non linéaire du fait de la modification de sa composante normale due au champ extérieur généré par la bobine.

La figure 18 montre le résultat obtenu par la présente invention. Elle présente les deux signaux obtenus après combinaison des 4 signaux mesurés par (31) et (32) (Bn1+Bt2, Btl-Bn2), le signal de sortie après le calcul de l'arc tangente de (Bn1+Bt2)/Bt1-Bn2) et la non linéarité de ce signal. La présente invention permet ainsi malgré la présence d'un champ extérieur d'avoir un capteur qui est toujours linéaire contrairement aux solutions de l'art antérieur.

Les figures 19 et 20 montrent deux vues de la présente invention appliquée sur un capteur linéaire. Ces figures représentent un aimant (1) de longueur L ayant une aimantation, représentée par le vecteur M , dont la direction varie linéairement suivant la longueur de l'aimant dans un plan défini par la direction de déplacement X et une normale à cette direction. Les deux sondes (31) et (32) mesurent chacune la composante normale et la composante tangentielle du champ magnétique généré par l'aimant (1). Les deux sondes sont spatialement espacées de quelques millimètres.

La figure 21 reprend la vue de la figure 20 avec la présence d'un champ magnétique extérieur Bn_ext + Bt_ext qui s'ajoute à la mesure du champ magnétique généré par l'aimant. La présente invention en réalisant la soustraction des deux composantes normales de (31) et (32) (Bn1-Bn2) et la soustraction des deux composantes tangentielles de (31) et (32) (Bt1-Bt2) permet d'annuler cette perturbation extérieure et de ne traiter que des signaux provenant du champ magnétique généré par l'aimant (1).

La figure 22 montre une vue de la présente invention appliquée sur un capteur rotatif petit angle avec la présence d'un champ magnétique extérieur B_ext qui s'ajoute à la mesure du champ magnétique généré par l'aimant. La présente invention en réalisant la soustraction des deux composantes normales de (31) et (32) (Bn1-Bn2) et la soustraction des deux composantes tangentielles de (31) et (32) (Bt1-Bt2) permet d'annuler cette perturbation extérieure et de ne traiter que des signaux provenant du champ magnétique généré par l'aimant (1).

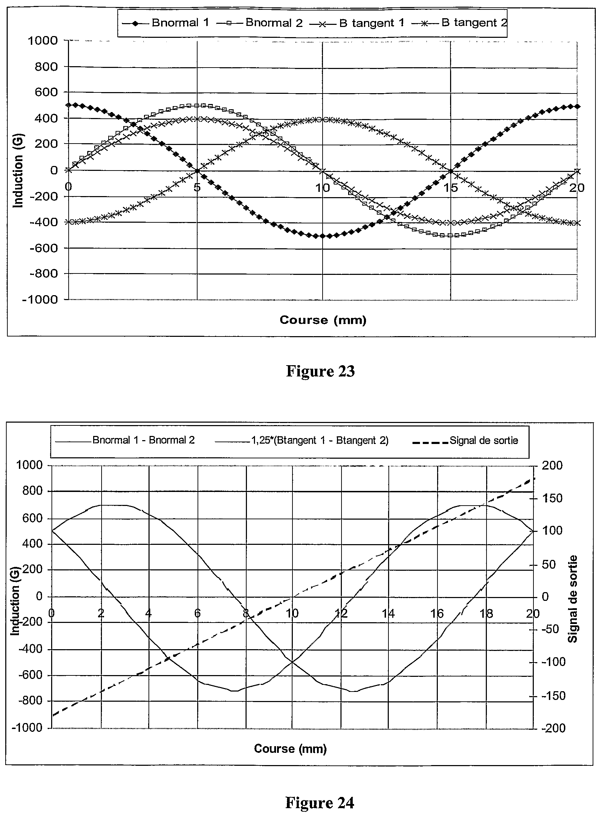

La figure 23 montre les deux composantes normales et les deux composantes tangentielles mesurées par les éléments magnétosensibles des sondes (31) et (32). Dans ce cas, les sondes (31) et (32) sont spatialement décalées d'un quart de période.

La figure 24 montre le résultat obtenu par la présente invention. Elle présente les deux signaux obtenus après combinaison des 4 signaux mesurés par (31) et (32) et normalisation de ces signaux (Bn1-Bn2, Gain*(Bt1-Bt2)) et présente le signal de sortie après le calcul de l'arc tangente de (Bn1-Bn2)/(Gain*(Bt1-Bt2)).

La figure 25 représente un mode de réalisation optimisé de la présente invention pour obtenir un capteur de très haute précision.

Cette solution consiste en un aimant permanent bague aimanté sensiblement diamétralement 1, cet aimant 1 génère en n'importe quel point de l'espace un champ magnétique dont les composantes normales ou axiales et tangentielles sont mesurées par huit éléments magnétosensibles. Deux éléments magnétosensibles sont situés en un seul point et avantageusement intégré dans un même boîtier 31a et les deux autres éléments magnétosensibles sont situés en un même point avantageusement intégré dans un même boîtier 32a qui est spatialement décalé de 90° du boîtier 31a. Deux autres éléments magnétosensibles sont situés en un seul point et avantageusement intégré dans un même boîtier 31b et les deux autres éléments magnétosensibles sont situés en un même point avantageusement intégré dans un même boîtier 32b, les boîtiers 31b et 32b spatialement décalés entre eux de 90° sont spatialement décalés tous deux de 45° des premiers Boitiers en quadrature 31a et 32a. Les 8 signaux sont ensuite sommés 2 à 2 pour annuler une des erreurs dues à une aimantation diamétrale. Les 4 signaux résultants sont ensuite combinés 2 à 2 pour annuler l'effet d'un champ extérieur et les erreurs dues à une aimantation diamétrale afin de sortir un signal électrique parfaitement proportionnel à la position angulaire de l'aimant. Le circuit de traitement du signal peut être intégré dans un des boîtiers, ou dans les quatre pour une question de redondance, ou bien peut être réalisé à l'extérieur des boîtiers.

La figure 26 représente comparativement l'amélioration possible de l'erreur de linéarité (en pourcentage de 360° en fonction de la course en degré) obtenue par l'adjonction de 4 éléments magnétosensibles (boitiers 31b et 32b) judicieusement positionnés pour corriger l'erreur d'aimantation liée à la géométrie de l'aimant 1.

Il ressort de cette figure que le signal A résultant des modes de réalisation précédents peut ne pas être tout à fait linéaire selon les conditions d'aimantation, les dimensions de l'aimant et sa nature, par l'introduction principalement d'une harmonique 3 non intégralement compensée (commuée en H4 par la fonction arc tangente). En revanche, le signal B résultant du mode de réalisation représenté par la figure 25 permet d'améliorer, voire d'annuler, ces défauts de linéarité.

## Revendications

1. Capteur de position magnétique angulaire ou linéaire comportant un élément mobile constitué d'au moins un aimant (1) présentant une direction d'aimantation qui varie linéairement suivant la direction de déplacement de l'aimant dans une surface définie par ladite direction de déplacement et une direction normale, au moins quatre éléments magnétosensibles (2, 3 et 4, 5) et au moins un circuit de traitement (6) délivrant un signal fonction de la position absolue de l'élément mobile dans lequel:

   - un premier jeu d'éléments magnétosensibles (2,3) est composé d'un couple d'éléments magnétosensibles (2,3) localisés au même point,
   - le premier jeu d'éléments magnétosensibles (2,3) étant spatialement décalé d'un deuxième jeu d'éléments magnétosensibles (4,5), également composé d'un couple d'éléments magnétosensibles (4,5) localisés au même point, suivant la direction de déplacement de l'aimant ;
   - et en ce qu'un élément magnétosensible (3, 5) du premier et du second jeu d'éléments magnétosensibles est apte à mesurer la composante tangentielle du champ magnétique et un élément magnétosensible (2, 4) du premier et du second jeu d'éléments magnétosensibles est apte à mesurer la composante normale du champ magnétique

   **caractérisé en ce que**:

   - le circuit de traitement (6) étant apte à réaliser au moins deux combinaisons algébriques, chaque combinaison algébrique comprenant une composante du premier jeu d'éléments magnétosensibles et une composante du second jeu d'éléments magnétosensibles, de sorte à définir deux signaux sinusoïdaux sensiblement déphasés électriquement de 90°.

2. Capteur de position magnétique selon la revendication précédente, **caractérisé en ce que** le circuit de traitement du signal (6) est apte à réaliser une amplification, une addition ou une soustraction des composantes du champ magnétique généré par l'aimant (1).

3. Capteur de position angulaire selon les revendications précédentes, **caractérisé en ce que** le premier jeu d'éléments magnétosensibles (2,3) et le deuxième jeu d'éléments magnétosensibles (4,5) sont décalés spatialement d'un quart de période suivant l'axe de rotation et **en ce que** le circuit de traitement du signal (6) est apte à combiner les signaux (B2, B3, B4, B5) issus des éléments magnétosensibles (2,3,4,5) de la façon suivante :

$$\text{Atan}((B2+B5)/(B3-B4))$$

où :

- B2 correspond à la composante normale mesurée par un élément magnétosensible (2) appartenant au premier jeu d'éléments magnétosensible (2,3) ;
- B3 correspond à la composante tangentielle mesurée par un élément (3) appartenant au premier jeu d'éléments magnétosensibles (2,3)
- B4 correspond à la composante normale mesurée par un élément magnétosensible (4) appartenant au deuxième jeu d'éléments magnétosensible (4,5) ;
- B5 correspond à la composante tangentielle mesurée par un élément (5) appartenant au deuxième jeu d'éléments magnétosensibles (4,5).

4. Capteur de position linéaire selon la revendication 2, **caractérisé en ce que** le premier jeu d'éléments magnétosensibles (2,3) et le deuxième jeu d'éléments magnétosensibles (4,5) sont décalés spatialement de plus d'un seizième de période et de moins de 15/16ème de période suivant l'axe de translation de la partie mobile et **en ce que** le circuit de traitement du signal (6) est apte à combiner les signaux (B2, B3, B4, B5) issus des éléments magnétosensibles (2,3,4,5) de la façon suivante :

$$Atan((B2-B4)/Gain*(B3-B5))$$

où :

- B2 correspond à la composante normale mesurée par un élément magnétosensible (2) appartenant au premier jeu d'éléments magnétosensibles (2,3) ;
- B3 correspond à la composante tangentielle mesurée par un élément (3) appartenant au premier jeu d'éléments magnétosensibles (2,3)
- B4 correspond à la composante normale mesurée par un élément magnétosensible (4) appartenant au deuxième jeu d'éléments magnétosensibles (4,5) ;
- B5 correspond à la composante tangentielle mesurée par un élément (5) appartenant au deuxième jeu d'éléments magnétosensibles (4,5) ;
- Gain correspond à une normalisation des signaux (B2-B4) et (B3-B5) en ajustant l'amplitude du signal (B3-B5) afin d'obtenir deux signaux (B2-B4) et (B3-B5) déphasés de 90° de même amplitude.

5. Capteur de position magnétique selon la revendication 1, **caractérisé en ce que** le premier jeu d'éléments magnétosensibles (2,3) est intégré dans un seul et même boîtier (31), et **en ce que** le deuxième jeu d'éléments magnétosensibles (4,5) est intégré dans un seul boîtier (32).

6. Capteur de position magnétique selon les revendications précédentes, **caractérisé en ce que** l'aimant permanent (1) est un cylindre creux, une tuile ou un aimant plat.

7. Capteur de position magnétique selon les revendications précédentes, **caractérisé en ce que** les éléments magnétosensibles sont localisés sensiblement dans le plan médian de l'aimant, ce plan médian étant perpendiculaire à l'axe de rotation de l'aimant (1).

8. Capteur de position magnétique selon les revendications précédentes, **caractérisé en ce que** l'aimant permanent (1) est collé sur un arbre tournant ou se translatant dont la position est à mesurer.

9. Capteur de position magnétique selon les revendications précédentes, **caractérisé en ce que** l'aimant permanent (1) est collé sur une culasse ferromagnétique.

10. Capteur de position angulaire selon les revendications 1 à 9, **caractérisé en ce que** l'aimant présente une aimantation graduelle sinusoïdale le long de l'aimant.

11. Capteur de position angulaire selon l'une des revendications précédentes comportant :

- un troisième jeu et un quatrième jeu d'éléments magnétosensibles spatialement décalés des premier jeu et second jeu d'éléments magnétosensibles,

- les troisième jeu et quatrième jeu d'éléments magnétosensibles étant composés chacun d'un couple d'éléments magnétosensibles localisés au même point,
- un élément magnétosensible du troisième jeu et du quatrième jeu d'éléments magnétosensibles étant apte à mesurer la composante tangentielle du champ magnétique et un élément magnétosensible du troisième jeu et du quatrième jeu d'éléments magnétosensibles étant apte à mesurer la composante normale du champ magnétique,
- le circuit de traitement étant apte, avant de réaliser les combinaison algébriques, à additionner respectivement les composantes normales du premier jeu et du troisième jeu d'éléments magnétosensibles et les composantes tangentielles du premier jeu et du troisième jeu d'éléments magnétosensibles ainsi qu'à additionner respectivement les composantes normales du deuxième jeu et du quatrième jeu d'éléments magnétosensibles et les composantes tangentielles du deuxième jeu et du quatrième jeu d'éléments magnétosensibles

**Patentansprüche**

1. Magnetischer Sensor für die lineare oder winkelmäßige Position mit einem beweglichen Element, das aus mindestens einem Magneten (1) besteht, welcher eine Magnetisierungsrichtung aufweist, die entsprechend der Bewegungsrichtung des Magneten auf einer durch die Bewegungsrichtung und eine Normalrichtung begrenzte Fläche linear unterschiedlich ist, mindestens vier magnetempfindlichen Elementen (2, 3 und 4, 5) und mindestens einer Verarbeitungsschaltung (6), die ein Signal in Abhängigkeit von der absoluten Position des beweglichen Elements liefert, in dem:

   - ein erster Satz magnetempfindlicher Elemente (2, 3) aus einem magnetempfindlichen Elementenpaar (2, 3) besteht, das sich an ein und demselben Punkt befindet,
   - sich der erste Satz magnetempfindlicher Elemente (2, 3) räumlich versetzt im Verhältnis zum zweiten magnetempfindlicher Satz Elemente (4, 5) befindet, wobei dieser ebenfalls aus einem Paar magnetempfindlicher Elemente (4, 5) besteht, welche sich der Verschiebungsrichtung des Magneten folgend an ein und demselben Punkt befinden;
   - das magnetempfindliche Element (3, 5) des ersten und des zweiten Satzes magnetempfindlicher Elemente in der Lage ist, die Tangentialkomponente des Magnetfeldes zu messen und ein magnetempfindliches Element (2, 4) des ersten und des zweiten Satzes magnetempfindlicher Elemente in der Lage ist, die Normalkomponente des Magnetfelds zu messen.
   - **dadurch gekennzeichnet, dass**:
   - die Verarbeitungsschaltung (6) in der Lage ist, mindestens zwei algebraische Kombinationen durchzuführen, wobei jede algebraische Kombination eine Komponente des ersten Satzes magnetempfindlicher Elemente und eine Komponente des zweiten Satzes magnetempfindlicher Elemente umfasst, so dass zwei im Wesentlichen elektrisch um 90° phasenverschobene sinusoidale Signale definiert werden.

2. Magnetischer Positionssensor nach dem vorhergehenden Anspruch, **dadurch gekennzeichnet, dass** die Verarbeitungsschaltung des Signals (6) in der Lage ist, eine Erweiterung, eine Addition oder eine Subtraktion der Komponenten des durch den Magneten (1) generierten Magnetfelds herzustellen.

3. Winkelpositionssensor nach den vorhergehenden Ansprüchen, **dadurch gekennzeichnet, dass** der erste Satz magnetempfindlicher Elemente (2, 3) und der zweite Satz magnetempfindlicher Elemente (4, 5) auf der Drehachse räumlich um eine viertel Periode versetzt sind und dass die Verarbeitungsschaltung des Signals (6) in der Lage ist, die Signale (B2, B3, B4, B5) der magnetempfindlichen Elemente (2, 3, 4, 5) wie folgt miteinander zu kombinieren:

$$- \quad \text{Atan (B2+B5) / (B3-B4)}$$

oder:

   - B2 ist die Normalkomponente, die durch ein magnetempfindliches Element (2), dass zum ersten Satz magnetempfindlicher Elemente (2, 3) gehört, gemessen wird;
   - B3 ist die Tangentialkomponenten, die durch ein Element (3), welches zum ersten Satz magnetempfindlicher Elemente (2, 3) gehört, gemessen wird
   - B4 ist die Normalkomponente, die durch ein magnetempfindliches Element (4), das zu einem zweiten Satz magnetempfindlicher Elemente (4, 5) gehört, gemessen wird;
- B5 ist die Tangentialkomponente, die durch ein Element (5), das zum zweiten Satz magnetempfindlicher Elemente (4, 5) gehört, gemessen wird.

4. Linearer Positionssensor nach Anspruch 2, **dadurch gekennzeichnet, dass** der erste Satz magnetempfindlicher Elemente (2, 3) und der zweite Satz magnetempfindlicher Elemente (4, 5) auf der Bewegungsachse des beweglichen Teils räumlich mehr als eine sechzehntel Periode und weniger als eine 15/16tel Periode versetzt zueinander stehen und darin, dass die Verarbeitungsschaltung des Signals (6) in der Lage ist, die Signale (B2, B3, B4, B5) der magnetempfindlichen Elemente (2, 3, 4, 5) wie folgt miteinander zu kombinieren:

$$- \quad \text{Atan } (B2-B4)/\text{Amplitudengang* } (B3-B5))$$

oder:

- B2 ist die durch ein magnetempfindliches Element (2) des ersten Satzes magnetempfindlicher Elemente (2, 3) gemessene Normalkomponente;
- B3 ist die durch ein Element (3) des ersten Satzes magnetempfindlicher Elemente (2, 3)gemessene Tangentialkomponente;
- B4 ist die durch ein magnetempfindliches Element (4) des zweiten Satzes magnetempfindlicher Elemente (4, 5) gemessene Normalkomponente;
- B5 ist die durch ein Element (5) des zweiten Satzes magnetempfindlicher Elemente (4, 5) gemessene Tangentialkomponente;
- Amplitudengang ist eine Standardisierung von Signalen (B2-B4) und (B3-B5) durch Anpassen der Signalamplitude (B3-B5), um zwei, um 90° phasenversetzte Signale (B2-B4) und (B3-B5) mit gleicher Amplitude zu erzielen.

5. Magnetischer Positionssensor nach Anspruch 1, **dadurch gekennzeichnet, dass** der erste Satz magnetempfindlicher Elemente (2, 3) in einen Kasten (31) eingebaut wird, und dadurch, dass der zweite Satz magnetempfindlicher Elemente (4, 5) in einen Kasten eingebaut wird.

6. Magnetischer Positionssensor nach den vorhergehenden Ansprüchen, **dadurch gekennzeichnet, dass** der Dauermagnet (1) ein hohler Zylinder, eine welliger oder ein flacher Magnet ist.

7. Magnetischer Positionssensor nach den vorhergehenden Ansprüchen, **dadurch gekennzeichnet, dass** sich die magnetempfindlichen Elemente im Wesentlichen auf der Mittelebene des Magneten befinden, wobei diese Mittelebene senkrecht zur Drehachse des Magneten (1) verläuft.

8. Magnetischer Positionssensor nach den vorhergehenden Ansprüchen, **dadurch gekennzeichnet, dass** der Dauermagnet (1) an eine sich drehende oder fahrende Welle geklebt ist, deren Position zu messen ist.

9. Magnetischer Positionssenor nach den vorhergehenden Ansprüchen, **dadurch gekennzeichnet, dass** der Dauermagnet (1) an einen ferromagnetischen Zylinderkopf geklebt ist.

10. Winkelpositionssensor nach den Ansprüchen 1 bis 9, **dadurch gekennzeichnet, dass** der Magnet eine sinusoidale graduelle Magnetisierung aufweist.

11. Winkelpositionssensor nach einem der vorhergehenden Ansprüche, der folgendes umfasst:

- einen dritten und einen vierten Satz magnetempfindlicher Elemente, die zum ersten und zweiten Satz magnetempfindlicher Elemente räumlich versetzt angeordnet ist.
- wobei der dritte und der vierte Satz magnetempfindlicher Elemente jeweils aus einem Paar magnetempfindlicher Elemente besteht, die sich an ein und derselben Stelle befinden;
- wobei ein magnetempfindliches Element des dritten und des vierten Satzes magnetempfindlicher Elemente in der Lage ist, die Tangentialkomponente des Magnetfeldes zu messen, und ein magnetempfindliches Element des dritten und des vierten Satzes magnetempfindlicher Elemente in der Lage ist, die Normalkomponente des Magnetfelds zu messen,
- wobei die Verarbeitungsschaltung in der Lage ist, vor Herstellung der algebraischen Kombination jeweils die Normalkomponenten des ersten und des dritten Satzes magnetempfindlicher Elemente und die Tangentialkomponenten des ersten und des dritten Satzes magnetempfindlicher Elemente zu addieren, und jeweils die Normalkomponenten des zweiten Satzes und des vierten Satzes magnetempfindlicher Elemente und die Tangentialkomponenten des zweiten und des vierten Satzes magnetempfindlicher Elemente zu addieren.

**Claims**

1. An angular or linear magnetic position sensor comprising a mobile member consisting of at least one magnet (1) having a magnetization direction that varies linearly according to the direction of the movement of the magnet in a surface defined by said movement direction and a normal direction, at least four magneto-sensitive elements (2, 3 and 4, 5) and at least one processing circuit (6) providing a signal based on the absolute position of the mobile member wherein:

   - a first set of magneto-sensitive elements (2, 3) is composed of a pair of magneto-sensitive elements (2, 3) located at the same point,
   - the first set of magneto-sensitive elements (2, 3) being spatially offset from a second set of magneto-sensitive elements (4, 5), also composed of a pair of magneto-sensitive elements (4, 5) located at the same point, along the direction of the movement of the magnet;
   - and in that a magneto-sensitive element (3, 5) of the first and second set of magneto-sensitive elements is adapted to measure the tangential component of the magnetic field and a magneto-sensitive element (2, 4) of the first and second set of magneto-sensitive elements is adapted to measure the normal component of the magnetic field

   **characterized in that** :

   - the processing circuit (6) is adapted to perform at least two algebraic combinations, with each algebraic combination comprising a component of the first set of magneto-sensitive elements and a component of the second set of magneto-sensitive elements, so as to define two sinusoidal signals substantially having an electrical phase shift of 90°.

2. A magnetic position sensor according to the preceding claim, **characterized in that** the signal processing circuit (6) is adapted to perform an amplification, an addition or a subtraction of the components of the magnetic field generated by the magnet (1).

3. An angular position sensor according to the preceding claims, **characterized in that** the first set of magneto-sensitive elements (2, 3) and the second set of magneto-sensitive elements (4, 5) are spatially shifted by a quarter of a period along the axis of rotation and **in that** the signal processing circuit (6) is adapted to combine the signals (B2, B3, B4, B5) from the magneto-sensitive elements (2, 3, 4, 5) as follows:

$$\texttt{Atan((B2+B5)/(B3-B4))}$$

   where:

   - B2 corresponds to the normal component measured by a magneto-sensitive element (2) belonging to the first set of magneto-sensitive elements (2, 3);
   - B3 corresponds to the tangential component measured by an element (3) belonging to the first set of magneto-sensitive elements (2, 3)
   - B4 corresponds to the normal component measured by a magneto-sensitive element (4) belonging to the second set of magneto-sensitive elements (4, 5);
   - B5 corresponds to the tangential component measured by an element (5) belonging to the second set of magneto-sensitive elements (4, 5).

4. A linear position sensor according to claim 2, **characterized in that** the first set of magneto-sensitive elements (2, 3) and the second set of magneto-sensitive elements (4, 5) are spatially shifted by more than one sixteenth of a period and by less than 15/16th of a period along the axis of translation of the mobile part and **in that** the signal processing circuit (6) is adapted to combine the signals (B2, B3, B4, B5) from the magneto-sensitive elements (2, 3, 4, 5) as follows:

```
Atan((B2-B4)/Gain*(B3-B5))
```

where:

- B2 corresponds to the normal component measured by a magneto-sensitive element (2) belonging to the first set of magneto-sensitive elements (2, 3);
- B3 corresponds to the tangential component measured by an element (3) belonging to the first set of magneto-sensitive elements (2, 3)
- B4 corresponds to the normal component measured by a magneto-sensitive element (4) belonging to the second set of magneto-sensitive elements (4, 5);
- B5 corresponds to the tangential component measured by an element (5) belonging to the second set of magneto-sensitive elements (4, 5);
- Gain corresponds to a normalization of the signals (B2-B4) and (B3-B5) by adjusting the amplitude of the signal (B3-B5) so as to obtain two signals (B2-B4) and (B3-B5) with a phase shift of 90° having the same amplitude.

5. A magnetic position sensor according to claim 1, **characterized in that** the first set of magneto-sensitive elements (2, 3) is integrated in a single box (31), and **in that** the second set of magneto-sensitive elements (4,5) is integrated in a single box (32).

6. A magnetic position sensor according to the preceding claims, **characterized in that** the permanent magnet (1) is a hollow cylinder, a tile or a flat magnet.

7. A magnetic position sensor according to the preceding claims, **characterized in that** the magneto-sensitive elements are located substantially in the median plane of the magnet, with such median plane being perpendicular to the axis of rotation of the magnet (1).

8. A magnetic position sensor according to the preceding claims, **characterized in that** the permanent magnet (1) is glued on a rotating or translating shaft the position of which is to be measured.

9. A magnetic position sensor according to the preceding claims, **characterized in that** the permanent magnet (1) is glued on a ferromagnetic yoke.

10. An angular position sensor according to claims 1 to 9, **characterized in that** the magnet has a sinusoidal gradual magnetization along the magnet.

11. An angular position sensor according to one of the preceding claims comprising:

- a third set and a fourth set of magneto-sensitive elements spatially offset from the first set and second set of magneto-sensitive elements,
- the third set and fourth set of magneto-sensitive elements being each composed of a pair of magneto-sensitive elements located at the same point,
- a magneto-sensitive element of the third set and of the fourth set of magneto-sensitive elements being adapted to measure the tangential component of the magnetic field and a magneto-sensitive element of the third set and of the fourth set of magneto-sensitive elements being adapted to measure the normal component of the magnetic field,
- the processing circuit being adapted, prior to performing the algebraic combinations, to respectively add the normal components of the first set and the third set of magneto-sensitive elements and the tangential components of the first set and the third set of magneto-sensitive elements, as well as to respectively add the normal components of the second set and fourth set of magneto-sensitive elements and the tangential components of the second set and the fourth set of magneto-sensitive elements.

**Figure 1**

**Angle=Atan (Bn1/Bn2)**

**Figure 2**

Angle=Atan (Gain*Bt1/Bn1)

**Figure 3**

**Figure 4**

**Figure 5**

**Figure 6**

Angle=Atan ((Bn1+Bt2)/(Bt1-Bn2))

**Figure 7**

**Figure 8**

Figure 9

Figure 10

**Figure 11**

**Figure 12**

Position 1 :

Position 2 :

Figure 13

**Figure 14**

**Figure 15**

**Figure 16**

**Figure 17**

Figure 18

Figure 19

Figure 20

**Bn_ext**

**Bt_ext**

31

N1    N2    32

T1    T2

1

x

**Figure 21**

Bn_ext

31

N1  T1  N2  32

T2

1

L

**Figure 22**

**Figure 23**

**Figure 24**

$$\text{Angle=Atan}\ (((Bn1a+Bn1b)+(Bt2a+Bt2b))/((Bt1a+Bt1b-(Bn2a+Bn2b)))$$

**Figure 25**

**Figure 26**

## RÉFÉRENCES CITÉES DANS LA DESCRIPTION

**Documents brevets cités dans la description**

- EP 1083406 A
- WO 07057563 A
- WO 27099238 A
- DE 102006051720